(19) **Europäisches Patentamt / European Patent Office / Office européen des brevets**

(11) **EP 1 778 527 B1**

(12) **EUROPÄISCHE PATENTSCHRIFT**

(45) Veröffentlichungstag und Bekanntmachung des Hinweises auf die Patenterteilung:
**06.05.2009 Patentblatt 2009/19**

(21) Anmeldenummer: **05762338.1**

(22) Anmeldetag: **12.07.2005**

(51) Int Cl.:
**B60R 22/34** *(2006.01)*

(86) Internationale Anmeldenummer:
**PCT/EP2005/007723**

(87) Internationale Veröffentlichungsnummer:
**WO 2006/008084 (26.01.2006 Gazette 2006/04)**

(54) **VERFAHREN ZUM FESTLEGEN DES GURTAUSZUGES IN EINEM INSASSENRÜCKHALTESYSTEM FÜR FAHRZEUGE UND INSASSENRÜCKHALTESYSTEM FÜR FAHRZEUGE**

METHOD FOR DETERMINING THE EXTENSION OF A BELT IN A PASSENGER RESTRAINT SYSTEM FOR VEHICLES AND PASSENGER RESTRAINT SYSTEM FOR VEHICLES

PROCEDE DE DETERMINATION DE LA RALLONGE DE LA CEINTURE DE SECURITE DANS UN SYSTEME DE RETENUE D'OCCUPANTS POUR UN VEHICULE ET SYSTEME DE RETENUE D'OCCUPANTS POUR UN VEHICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.07.2004 DE 102004035486**

(43) Veröffentlichungstag der Anmeldung:
**02.05.2007 Patentblatt 2007/18**

(73) Patentinhaber: **Dramlitsch, Thomas**
**10557 Berlin (DE)**

(72) Erfinder: **Dramlitsch, Thomas**
**10557 Berlin (DE)**

(74) Vertreter: **Theobald, Andreas**
**Rothkopf Theobald Elbel**
**Glinkastrasse 30**
**10117 Berlin (DE)**

(56) Entgegenhaltungen:
**EP-A- 1 350 697          DE-C1- 19 604 483**

**Beschreibung**

Vorliegende Erfindung betrifft ein Verfahren zum Festlegen des Gurtauszuges in einem Insassenrückhaltesystem für Fahrzeuge sowie ein Insassenrückhaltesystem für Fahrzeuge.

Moderne Kraftfahrzeuge sind mit einer Reihe von aktiven und passiven Sicherheitssystemen ausgestattet. Aktive Sicherheitssysteme greifen dabei direkt in das Fahrverhalten des Fahrzeuges ein, während passive Sicherheitssysteme den Schutz der Insassen vor Verletzung bei einem Unfall gewährleisten sollen. Aktive Sicherheitssysteme sind beispielsweise das Antiblockiersystem oder eine elektronische Fahrdynamikregelung. Passive Sicherheitssysteme umfassen beispielsweise Fahrzeugzonen, welche bei einem Unfall einer definierten Verformung unterliegen (sog. Knautschzonen). Eine wichtige Gruppe passiver Sicherheitssysteme stellen die Irisassenrückhaltesysteme dar. Diese sorgen beispielsweise mittels Sicherheitsgurten und/oder aufblasbaren Prallsäcken, so genannten Airbags, für eine Minimierung des Verletzungsrisikos von Insassen bei einem Unfall.

Sicherheitsgurte sollen verhindern, dass sich der Körper eines Fahrzeuginsassen während eines Unfalls zu weit vorverlagert und beispielsweise auf das Lenkrad aufschlägt. Moderne Sicherheitsgurte sind mit Gurtstrammern ausgestattet, welche im Falle eines Unfalles den Gurt stramm ziehen und sperren, um eine unkontrollierte Vorverlagerung zuverlässig zu verhindern. Falls die Rückhaltewirkung des Gurtes jedoch zu stark ausgeprägt ist, kann der Gurt selber eine Belastung des zurückzuhaltenden Insassen verursachen, die zu Verletzungen führen kann. Derartige Verletzungen können beispielsweise im Brustbereich des Insassen auftreten.

Um Verletzungen durch die Gurte zu vermeiden, sind in modernen Fahrzeugen daher Kraftbegrenzer eingebaut, die im Falle eines Unfalles die zwischen Gurt und Fahrzeuginsasse wirkende Kraft begrenzen, indem sie einen definieren Gurtauszug zulassen, welcher über einen bestimmten Kraft-Weg-Verlauf definiert ist. Der Kraft-Weg-Verlauf ist beispielsweise derart ausgestaltet, dass ein Gurtauszug so lange verhindert wird, bis die zwischen Gurt und Fahrzeuginsassen wirksame Kraft eine vorgegebene Kraft, die in der Regel etwa 4 kN beträgt, erreicht. Beim Erreichen dieser Kraft erfolgt dann ein definierter Gurtauszug derart, dass die auf den Insassen wirkende Kraft die vorgegebene Kraft nicht überschreitet.

Die beschriebenen Kraftbegrenzer sind in der Regel auf standardisierte Fahrzeuginsassen, so genannte 50%er ausgelegt. Ein 50%er ist ein Mensch mit einer Körpergröße von 1,80 m und einer Körpermasse von 75 kg. Größe und Gewicht eines solchen Menschen entsprechen einem Menschen, der genau den Durchschnitt der Bevölkerung repräsentiert, d.h. die eine Hälfte der Bevölkerung ist größer und schwerer, die andere Hälfte kleiner und leichter. Bei einem Aufprall gegen eine starre Wand mit 56 km/h (35 miles/hour) führt der beschriebene Kraftbegrenzter dazu, dass der definierte Gurtauszug eine Vorverlagerung eines 50%ers in Richtung auf das Lenkrad von ca. 30 cm zulässt.

Ist der Fahrzeuginsasse jedoch kein 50%er sondern beispielsweise eine 5% Frau, also eine Frau mit einem Körpergewicht von ca. 50 kg und einer Körpergröße von 1,50 m (d.h. nur 5% aller Frauen sind kleiner und leichter), so ist die Kraftbegrenzung mit 4 kN nicht angemessen, um die durch den Gurt verursachte Belastung in erträglichen Maßen zu halten.

Um für Fahrzeuginsassen mit verschiedenen Körpergrößen und Körpergewichten die durch den Gurt verursachte Belastung erträglich zu halten, ist beispielsweise in der gattungsgemäßen DE 196 04 483 C1 vorgeschlagen, die Körperdaten eines Fahrzeuginsassen zu erfassen und den von der Kraftbegrenzungseinrichtung zugelassenen Gurtauszug anhand der erfassten Körperdaten zu ermitteln. Das Ermitteln der Körperdaten eines Fahrzeuginsassen ist jedoch kompliziert und nicht immer zuverlässig.

Aufgabe der vorliegenden Erfindung ist es daher, ein Verfahren zum Festlegen des Gurtauszuges in einem Insassenrückhaltesystem für Fahrzeuge zur Verfügung zu stellen, mit welchem sich bei einem Unfall die Belastung eines Fahrzeuginsassen durch den Sicherheitsgurt weitgehend unabhängig von seinen Körperdaten begrenzen lässt.

Eine weitere Aufgabe der vorliegenden Erfindung ist es, ein Insassenrückhaltesystem für Fahrzeuge zur Verfügung zu stellen, mit welchem sich bei einem Unfall die Belastung eines Fahrzeuginsassen durch den Sicherheitsgurt weitgehend unabhängig von dessen Körperdaten begrenzen lässt.

Diese erste Aufgabe wird durch ein Verfahren zum Festlegen des Gurtauszuges in einem Insassenrückhaltesystem für Fahrzeuge nach Anspruch 1 und die zweite Aufgabe durch ein Insassenrückhaltesystem für Fahrzeuge nach Anspruch 6 gelöst. Die abhängigen Ansprüche enthalten vorteilhafte Ausgestaltungen der vorliegenden Erfindung.

Im erfindungsgemäßen Verfahren zum Festlegen des Gurtauszuges in einem Insassenrückhaltesystem für Fahrzeuge mit Sicherheitsgurt erfolgt ein Erfassen der Fahrzeugbeschleunigung und ein Festlegen, vorteilhafterweise ein direktes Festlegen, des Gurtauszuges in Abhängigkeit von der erfassten Fahrzeugbeschleunigung. Die Strecke, um die ein Insasse im Falle eines Unfalls vorverlagert wird, hängt dann alleine von der beim Unfall auftretenden Beschleunigung des Fahrzeugs ab. Die Vorverlagerung ermöglicht eine Bewegung des Insassen gegenüber dem Fahrzeug und hängt anders als im Stand der Technik zu keiner Zeit von der zwischen dem Gurt und dem Insassen wirkenden Kraft ab. Sie verhindert dadurch unabhängig von der Körpermasse des Insassen, dass eine den vorgegebenen Beschleunigungswert übersteigende Beschleunigung an den Insassen übertragen wird. Im Stand der Technik wird der Gurtauszug hingegen nicht in direkter Abhängigkeit von der Fahrzeugverzögerung festgelegt, sondern hängt stets von der momentanen Gurtkraft (oder einem momentanen Gurtauszugswiderstand) ab, welche wiederum in Abhängigkeit von vielen Variablen festgelegt sein kann.

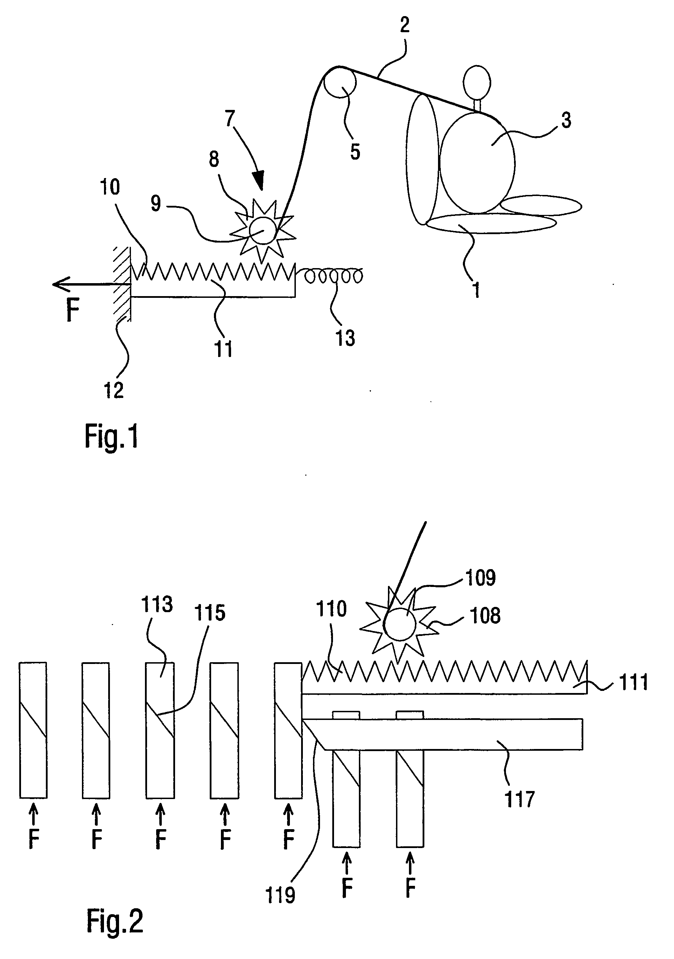

Dem erfindungsgemäßen Verfahren zum Festlegen des Gurtauszuges liegt die Erkenntnis zugrunde, dass die bei einem Unfall, beispielsweise bei einem Frontalaufprall gegen eine Wand, von einem Insassen erlittene Beschleunigung ein geeignetes Maß für die Belastung des Insassen darstellt. Es sei in diesem Zusammenhang darauf hingewiesen, dass unter einer Beschleunigung jede Art von Geschwindigkeitsänderung zu verstehen ist. Es wird also nicht die umgangssprachliche Unterscheidung zwischen einer Beschleunigung und einer Verzögerung getroffen. Vielmehr ist im Rahmen der vorliegenden Beschreibung vom wissenschaftlichen Beschleunigungsbegriff auszugehen, d.h. eine Verzögerung ist als negative Beschleunigung zu verstehen. Ebenso verstehen wir unter "Festlegen des Gurtauszuges" das festlegen einer Gurtauszugsstrecke, so wie es ein Fachmann auf dem Gebiet der Fahrzeugsicherheit verstehen würde. Entscheidet beispielsweise das erfindungsgemäße Verfahren, dass aufgrund der erfassten Verzögerung der Auszug auf 42mm festgelegt werden soll, so kann der Insasse nicht mehr als 42mm Gurtband ausziehen, unabhängig von der momentanten Gurtkraft, der Insassenmasse oder anderen Größen. Dies kann durch geeignete Verriegelungsmechanismmen geschehen, so wie sie beispielhaft in einem Ausführungsbeispiel des erfindungsgemäßen Rückhaltesystems (siehe etwa Figur 2) dargestellt sind. Insbesondere ist beim erfindungsgemäßen Verfahren ein Sensieren des Gurtauszuges nicht unbedingt erforderlich.

Wenn nun der Gurtauszug in Abhängigkeit von der erfassten Fahrzeugbeschleunigung statt von der Gurtkraft festgelegt wird, so lässt sich die auf einen Fahrzeuginsassen übertragene Beschleunigung und damit die Belastung des Fahrzeuginsassen bei einem Unfall begrenzen. Im Unterschied dazu wird in den Verfahren nach Stand der Technik, bei denen der Gurtauszug auf der Basis der auf den Gurt einwirkenden Kraft festgelegt wird, die Beschleunigung des zurückzuhaltenden Fahrzeuginsassen, insbesondere die Beschleunigung des Brustkorbs des Fahrzeuginsassen, nur für eine bestimmte Zielgruppe, nämlich den 50%er zuverlässig in erträglichen Grenzen gehalten.

Die Beschleunigung, die ein Gurt nach Stand der Technik bei einer vorgegebenen Kraftbegrenzung beim Fahrzeuginsassen verursacht, hängt von dessen Körpermasse ab. Bei einer bestimmten auf den Fahrzeuginsassen wirkenden Kraft erhält man die Beschleunigung des Insassen, indem man die vom Gurt und ggf. anderen Rückhaltesystemen auf den Insassen ausgeübte Kraft durch die Körpermasse des Insassen dividiert. Je geringer die Körpermasse des Insassen ist, desto höher ist dabei die durch die Kraft verursachte Beschleunigung. Mit anderen Worten, die 5%ige Frau wird bei einer bestimmten durch den Gurt übertragenen Kraft eine deutliche höhere Beschleunigung erfahren als der 50%er. Wenn nun der Gurtauszug durch ein Kraft-Weg-Verhältnis festgelegt ist, in dem bspw. kein Gurtauszug erfolgt, bevor die vom Gurt übertragene Kraft 4kN übersteigt, so erfährt der 50%er bei 4kN noch eine erträgliche Beschleunigung, während die Beschleunigung der 5%igen Frau die Grenze des Erträglichen überschreitet. Mit dem erfindungsgemäßen Verfahren ist dagegen sichergestellt, dass unabhängig von den Körpermassen der Insassen die auf den jeweiligen Insassen übertragene Beschleunigung in erträglichen Maßen gehalten werden kann. Dies kann beispielsweise dadurch erreicht werden, dass ein Gurtauszug nur dann erfolgt, wenn die erfasste Fahrzeugbeschleunigung einen vorgegebenen Beschleunigungswert überschreitet. Die Fahrzeugbeschleunigung wird dann lediglich bis zum vorgegebenen Beschleunigungswert auf den zurückzuhaltenden Insassen übertragen.

Wenn die Fahrzeugbeschleunigung den vorgegebenen Beschleunigungswert überschreitet, so kann der Gurtauszug beispielsweise durch den Betrag, um den die Fahrzeugbeschleunigung den vorgegebenen Beschleunigungswert übersteigt, festgelegt werden. Dabei ist es möglich, bei Überschreiten des vorgegebenen Beschleunigungswertes den Gurtauszug so zu gestalten, dass die über den vorgegebenen Beschleunigungswert hinaus gehende Beschleunigung gar nicht an den zurückzuhaltenden Insassen weitergegeben wird. Alternativ ist es auch möglich, bei Überschreiten des vorgegebenen Beschleunigungswertes den Differenzwert zwischen der erfassten Fahrzeugbeschleunigung und den vorgegebenen Beschleunigungswert teilweise, beispielsweise nach einer bestimmten vorgegebenen funktionalen Beziehung an den Fahrzeuginsassen weiterzugeben. Auf diese Weise können unterschiedliche Gurtauszugsverläufe realisiert werden.

Insbesondere wenn der vorgegebene Beschleunigungswert die maximale an den zurückzuhaltenden Fahrzeuginsassen weiterzugebende Fahrzeugbeschleunigung repräsentiert, sollte der vorgegebene Beschleunigungswert die 60-fache Erdbeschleunigung (60 g) nicht übersteigen. Falls die Differenz zwischen der erfassten Fahrzeugbeschleunigung und dem vorgegebenen Beschleunigungswert teilweise an den zurückzuhaltenden Fahrzeuginsassen weitergegeben werden soll, ist es vorteilhaft, wenn der vorgegebene Beschleunigungswert geringer als 60 g und vorzugsweise geringer als ca. 35 g ist.

Das Erfassen der Fahrzeugbeschleunigung kann beim Erfindungsgemäßen Verfahren beispielsweise mittels eines relativ zum Fahrzeug beweglichen Referenzkörpers bekannter Masse erfolgen.

Ein erfindungsgemäßes Insassenrückhaltesystem für Fahrzeuge umfasst wenigstens einen einen Gurtauszug zulassenden Sicherheitsgurt, eine Blockiereinrichtung zum Blockieren des Gurtauszuges und eine auf die Blockiereinrichtung zur definierten Freigabe des Gurtauszuges einwirkende Freigabeeinrichtung. Außerdem umfasst das erfindungsgemäße Insassenrückhaltesystem eine Beschleunigungserfassungseinheit, die die Fahrzeugbeschleunigung erfasst und in Abhängigkeit von der erfassten Fahrzeugbeschleunigung auf die Freigabeeinrichtung zur Definition der definierten Freigabe des Gurtauszuges einwirkt.

Mit dem erfindungsgemäßen Insassenrückhaltesystem lässt sich insbesondere das erfindungsgemäße Verfahren realisieren. Die auf den zurückzuhaltenden Insassen übertragene Beschleunigung wird daher nicht durch die vom Gurt ausgeübte Kraft sondern durch die tatsächlich erfasste Fahrzeugbeschleunigung begrenzt. Da der Verlauf des Gurtauszuges somit nicht von der Körpermasse des zurückzuhaltenden Insassen abhängt, lässt sich mit dem erfindungsgemäßen Insassenrückhaltesystem die Belastung von Fahrzeuginsassen bei einem Unfall unabhängig von deren Körpermassen begrenzen.

In einer möglichen Ausgestaltung des Insassenrückhaltesystems umfasst die Beschleunigungserfassungseinheit eine relativ zum Fahrzeug bewegliche Referenzmasse, die gegen eine vorgegebene Kraft aus ihrer Position verschiebbar ist und die bei einer Positionsänderung gegen die vorgegebene Kraft als Freigabeeinheit zur Freigabe des Gurtauszuges auf die Blockiereinheit einwirkt. Eine derartige Beschleunigungserfassungseinheit kann insbesondere auch in Systemen Verwendung finden, in denen die Beschleunigungserfassungseinheit auf mechanischem Wege, das heißt über eine mechanische Kopplung, auf die Freigabeeinrichtung einwirkt. Eine mechanische Kopplung kann beispielsweise auch als redundantes System, etwa in Verbindung mit einer elektronischen Kopplung, ausgelegt sein, so dass ein definierter Gurtauszug auch dann gewährleistet ist, wenn die Bördelektronik des Fahrzeuges aufgrund des Unfalles ausgefallen ist.

Die die Referenzmasse in Position haltende Kraft F kann beispielsweise durch die Formel $F = B\,m\,g$ festgelegt sein, wobei g die Erdbeschleunigung, m die Masse der Referenzmasse und B ein frei wählbarer Parameter ist. Wenn der frei wählbare Parameter beispielsweise den dimensionslosen Wert 60 besitzt, so führt dies dazu, dass sich die Referenzmasse erst dann bewegt, wenn die erfasste Fahrzeugbeschleunigung einen Wert von 60 g, also die 60-fache Erdbeschleunigung, überschreitet. Ein Gurtauszug erfolgt somit erst dann, wenn mehr als die 60-fache Erdbeschleunigung auf den Insassen wirken würde.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.

Figur 1 zeigt ein erstes Ausführungsbeispiel für das erfindungsgemäße Insassenrückhaltesystem in einer stark schematisierten Dar- stellung.

Figur 2 zeigt ein zweites Ausführungsbeispiel für das erfindungsge- mäße Insassenrückhaltesystem in einer stark schematisierten Darstellung.

Eine stark schematisierte Darstellung eines Ausführungsbeispiels für das erfindungsgemäße Insassenrückhaltesystem ist in Figur 1 dargestellt. In Figur 1 sind ein Fahrzeugsitz 1, ein Rückhalte- oder Sicherheitsgurt 2 und ein auf dem Fahrzeugsitz 1 sitzender Fahrzeuginsasse 3 mit angelegtem Sicherheitsgurt 2 zu erkennen. Der Sicherheitsgurt 2 ist derart ausgelegt, dass er im Falle eines Unfalles zunächst gestrammt und gesperrt wird, um den Fahrzeuginsassen 3 im Sitz zurückzuhalten. Dadurch wird eine Vorverlagerung des Insassen 3 in Richtung auf die Fahrzeugkonsole (nicht dargestellt) verhindert. Daneben lässt der Gurt 2 unter bestimmten Bedingungen einen Gurtauszug zu, um eine Verletzung des Fahrzeuginsassen 3 durch den Sicherheitsgurt zu vermeiden.

Der Sicherheitsgurt 2 wird über eine in oder an der B-Säule des Fahrzeuges angeordnete Umlenkeinrichtung, die beispielsweise als Umlenkbügel oder Umlenkrolle ausgebildet sein kann, in Richtung auf eine Blockier- und Freigabeeinheit abgelenkt.

Die Blockier- und Freigabeeinheit 7 umfasst einen Aufroller zum Aufrollen des Sicherheitsgurtes 2 und mehrere Zahnräder, von denen in Figur 1 lediglich ein Zahnrad 9 symbolisch dargestellt ist. Die Blockiereinheit 7 umfasst weiterhin eine Zahnstange 11, welche eine vorgegebene Masse m besitzt und derart am Fahrzeug befestigt ist, dass sie mit einer vorgegebenen Kraft F in Position gehalten wird. Die Zähne 10 der Zahnstange 11 steht mit den Zähnen 8 mindestens eines der Zahnräder 9 derart in Kontakt, dass Zahnstange 11 eine Drehung des Zahnrades 9 bzw. der Zahnräder blockiert, solange sie in ihrer Position ruht. Erfolgt dagegen eine lineare Bewegung der Zahnstange 11, so wird die lineare Bewegung durch das Zusammenwirken mit dem Zahnrad 9 in eine Drehbewegung des Aufrollers umgesetzt, sodass ein Abrollen des Sicherheitsgurtes 2 erfolgt und dadurch ein Gurtauszug freigegeben wird.

Im vorliegenden Ausführungsbeispiel ist die vorgegebene Kraft F, mit der die Zahnstange 11 der Masse m im Position gehalten wird, durch die Formel $F = B\,m\,g$ gegeben, wobei g die Erdbeschleunigung und m die Masse der Zahnstange 11 bezeichnet. B stellt einen dimensionslosen Parameter dar, dessen Wert frei gewählt werden kann. Die auf die Zahnstange 11 wirkende vorgegebene Kraft kann beispielsweise durch eine Feder 13 realisiert sein, welche die Zahnstange 11 gegen einen Stützabschnitt 12 des Fahrzeuges drückt. Die Feder 13 verhindert eine den Gurtauszug freigebende Bewegung der Zahnstange 11 und bildet daher die Blockiereinheit zum Blockieren des Gurtauszuges. Die Feder 13 und der Stützabschnitt 12 sind derart angeordnet, dass im Falle eines Frontalaufpralles die aus dem Frontalaufprall resultierende Beschleunigung der Zahnstange 11 eine Kraft auf die Zahnstange 11 ausübt, die in die Richtung wirkt, die der Richtung der vorgegebene Kraft, welche die Zahnstange 11 in Position hält, entgegengesetzt ist. Die bei einem Frontalaufprall durch die Beschleunigung auf die Zahnstange 11 ausgeübte Kraft, ergibt sich dabei aus dem Produkt der auftretenden Fahrzeugbeschleunigung a und der Masse m der Zahnstange. Die Masse m der Zahnstange 11 kann daher als Beschleunigungserfassungseinheit angesehen werden, welche die Fahrzeugbeschleunigung erfasst.

Wenn der Parameter B beispielsweise den dimensionslosen Wert 20 besitzt, so bedeutet dies, dass die die Zahnstange 11 in Position haltende Kraft einen Wert besitzt, der der 20-fachen Erdbeschleunigung (20 g) multipliziert mit der Masse der Zahnstange entspricht. Wenn nun die aus dem. Frontalaufprall des Fahrzeuges resultierende Fahrzeugbeschleunigung geringer als 20 g ist, so ist die sich daraus ergebende Kraft geringer als die Kraft, welche die Zahnstange 11 in Position hält, so dass sie nicht ausreicht, die Zahnstange 11 aus ihrer Position zu verschieben. Übersteigt die Fahrzeugbeschleunigung aufgrund des Aufpralls jedoch 20 g, so ist die daraus resultierende Kraft größer als die Kraft, welche die Zahnstange 11 in Position hält. Daher wird die Zahnstange 11 aus ihrer Position abgelenkt und wirkt auf das Zahnrad 9 bzw. die Zahnräder zur Freigabe des Gurtauszuges ein. Für den Fahrzeuginsassen bedeutet dies, dass der Gurt gesperrt bleibt, solange die Fahrzeugbeschleunigung aufgrund des Aufpralls den Wert von 20 g nicht übersteigt. Der Sicherheitsgurt 2 überträgt dann im Wesentlichen die gesamte Fahrzeugbeschleunigung auf den Fahrzeuginsassen 3. Wenn die Fahrzeugbeschleunigung den Wert 20 g jedoch übersteigt und bspw. den Wert 22 g annimmt, so bewegt sich die Zahnstange 11 mit einer Beschleunigung von 2 g vorwärts. Die beschleunigte Bewegung führt zur einer Freigabe des Gurtauszuges, so dass die auf den Insassen 3 übertragene Fahrzeugbeschleunigung auf 20 g beschränkt bleibt. Die Zahnstage 11 stellt somit im vorliegenden Ausführungsbeispiel die Freigabeeinheit zum Freigeben des Gurtauszuges dar.

Wenn beispielsweise die Federkraft F der Feder 13 konstant ist so wird bei gegebener Fahrzeugverzögerung a(t) die Bewegung der Masse m und somit der Gurtauszug s(t) im Wesentlichen durch den Ausdruck

$$s(t) = \int_0^t\int_0^t (a(t) - \frac{F}{m})\,dt\,dt$$

beschrieben. Da F umd m feste Größen sind hängt der Gurtauszug -- wie gefordert -- allein von der Fahrzeugverzögerung a(t) ab. Die Verzögerung des Insassen wird somit bei einem bestimmten Wert (nämlich F/m) konstant gehalten und hängt zu keiner Zeit von der Gurtkraft ab.

Im Unterschied zu Freigabeeinrichtungen nach Stand der Technik beruht die Freigabe des Gurtauszuges also nicht auf einem Kraft-Weg-Verlauf des Sicherheitsgurtes, sondern wird alleine durch die Fahrzeugbeschleunigung bestimmt. Die Belastung des Insassen bei einem Unfall hängt daher nicht von seiner Körpermasse ab.

Ein zweites Ausführungsbeispiel für das erfindungsgemäße Insassenrückhaltesystem in Figur 2 dargestellt. Die Blockier- und Freigabeeinrichtung umfasst mindestens ein mit einer Aufrollspule für den Sicherheitsgurt gekoppeltes Zahnrad 109, dessen Zähne 108 sich im Eingriff mit den Zähnen 110 einer Zahnstange 111 befinden. Eine Drehung des Zahnrades 109 bewirkt dabei eine lineare Verschiebung der Zahnstange 111. Ebenso bewirkt eine lineare Verschiebung der Zahnstange 111 eine Drehung des Zahnrades 109. Außerdem umfasst die Blockier- und Freigabeeinrichtung eine Anzahl von Anschlagstiften 113, welche Anschläge zum Blockieren einer Bewegung der Zahnstange 111 in eine bestimmte Bewegungsrichtung bilden. Die Bewegungsrichtung der Zahnstange 111, welche durch die Anschlagstifte 113 blockiert wird, entspricht dabei derjenigen Bewegungsrichtung, welche in einer einen Gurtauszug herbeiführenden Drehung des Zahnrades 109 resultieren würde. Die Anschlagstifte 113 blockieren daher den Gurtauszug. Die Anschlagstifte 113 werden mit einer vorgegebenen Kraft F in Position gehalten und können gegen diese Kraft F aus ihrer Position verschoben werden. Im in Fig. 2 dargestellten Ausführungsbeispiel wirkt die die Anschlagstifte 113 in Position haltende Kraft F auf die Unterseite der Anschlagstifte 113.

Die Freigabeeinrichtung wird in der Figur 2 dargestellten Ausführungsform durch einen Referenzkörper 117 gebildet. Der Referenzkörper 117 weist an seiner Vorderseite eine Schrägfläche 119 auf, die derart abgeschrägt ist, dass sie im Zusammenwirken mit abgeschrägten Flächen 115 der Anschlagstifte 113 die Anschlagstifte 113 gegen die Kraft F aus ihrer Position verschieben kann. Das Verschieben eines Anschlagstiftes 113 ist jedoch nur dann möglich, wenn die von der Schrägfläche 119 auf die abgeschrägte Fläche 115 des Stiftes 113 übertragene Kraft, die die Stifte in Position haltende Kraft F übersteigt.

Der Referenzkörper 117 ist derart relativ zu den Anschlagstiften 113 angeordnet, dass im Falle eines Frontalaufpralles eine Beschleunigung des Referenzkörpers 117 in eine Richtung erfolgt, die zu einer von der Beschleunigung abhängenden Kraftübertragung auf die abgeschrägte Fläche 115 eines Anschlagstiftes 113 führt. Wenn diese Kraft die den entsprechenden Anschlagstift 113 in Position haltende Kraft F übersteigt, so wird dieser Anschlagstift 113 aus seiner Position verschoben und gibt die den Gurtauszug ermöglichende Bewegung der Zahnstange 111 frei. Die vorgegebene Kraft F, mit der die Anschlagstifte 113 in Position gehalten werden, ist dabei im Hinblick auf die Masse des Referenzkörpers 117, welche eine Referenzmasse darstellt, sowie die durch die Schrägflächen 115, 117 übertragbare Kraft bestimmt. Die Masse des Referenzkörpers stellt somit eine Beschleunigungserfassungseinheit dar, mit der Fahrzeugbeschleunigung erfasst wird.

Wenn in der Figur 2 dargestellten Ausführungsform die Beschleunigung nur kurzzeitig so hoch ist, dass die Anschlagstifte 113 aus ihrer Position verschoben werden können, so wird zuerst einmal nur derjenige Anschlagstift 113 aus seiner Position verschoben, welche dem Referenzkörper 117 vor dem Auftreten der hohen Beschleunigung am nächsten lag. Je nachdem, wie lange die Beschleunigung die erforderliche Höhe aufweist, werden weitere Anschlagstifte 113 aus ihrer Position verschoben. Sobald die Beschleunigung wieder abnimmt, können diejenigen Anschlagstifte 113, die bis dahin noch nicht aus ihrer Position verschoben wurden, auch nicht mehr verschoben werden, so dass der Gurtauszug erneut blockiert ist. Falls dann eine erneute hohe Beschleunigung auftritt, können weitere Anschlagstifte 113 verschoben werden, so dass ein weiterer Gurtauszug erfolgen kann.

Die in den Ausführungsbeispielen dargestellten Blockiereinrichtungen und Freigabeeinrichtungen stellen lediglich zwei Beispiele für mögliche Blockier-und Freigabeeinrichtungen dar. Ein Fachmann auf dem Gebiet der Rückhaltesysteme wird ohne weiteres eine Vielzahl weiterer Realisierungen des erfindungsgemäßen Prinzips, den Gurtauszug in Abhängigkeit von der erfassten Fahrzeugbeschleunigung festzulegen, finden können.

## Patentansprüche

1. Verfahren zum Festlegen einer Gurtauszugsstrecke in einem Insassenrückhaltesystem für Fahrzeuge mit Sicherheitsgurt **dadurch gekennzeichnet, dass** bei einem Unfall die folgende Schrittens ausgeführt werden :

   - Erfassen der beim Unfall auftretenden Fahrzeugbeschleunigung und
   - Festlegen der Gurtauszugsstrecke in Abhängigkeit von der erfassten Fahrzeugbeschleunigung.

2. Verfahren nach Anspruch 1, bei dem ein Gurtauszug nur dann erfolgt, wenn die erfasste Fahrzeugbeschleunigung einen vorgegebenen Beschleunigungswert überschreitet.

3. Verfahren nach Anspruch 2, bei dem der Gurtauszug durch den Betrag, um den die Fahrzeugbeschleunigung den vorgegebenen Beschleunigungswert übersteigt, festgelegt wird.

4. Verfahren nach Anspruch 2 oder 3, **dadurch gekennzeichnet, dass** der vorgegebene Beschleunigungswert die sechzigfache Erdbeschleunigung nicht übersteigt.

5. Verfahren nach einem der vorangehenden Ansprüche, bei dem das Erfassen der Fahrzeugbeschleunigung mittels eines relativ zum Fahrzeug beweglichen Referenzkörpers mit bekannter Masse erfolgt.

6. Insassenrückhaltesystem für Fahrzeuge mit

   - wenigstens einem einen Gurtauszug zulassenden Sicherheitsgurt (2),
   - einer Blockiereinrichtung (13, 113) zum Blockieren des Gurtauszuges und
   - einer auf die Blockiereinrichtung (13, 113) zur definierten Freigabe einer Gurtauszugsstrecke einwirkenden Freigabeeinrichtung (11, 117),

   **gekennzeichnet durch**
   eine die Fahrzeugbeschleunigung erfassende und in Abhängigkeit von der bei einem Unfall erfassten Fahrzeugbeschleunigung auf die Freigabeeinrichtung (11, 117) zur Definition der definierten Freigabe und zum Festlegen der Gurtauszugsstrecke einwirkende Beschleunigungserfassungseinheit (m).

7. Insassenrückhaltesystem nach Anspruch 6, **dadurch gekennzeichnet, dass** die Beschleunigungserfassungseinheit eine relativ zum Fahrzeug bewegliche Referenzmasse (m) aufweist, die gegen eine vorgegebene Kraft (F) aus ihrer Position verschiebbar ist und die bei einer Positionsänderung gegen die vorgegebene Kraft als Freigabeeinheit zur Freigabe des Gurtauszuges auf die Blockiereinheit (13, 113) einwirkt.

8. Insassenrückhaltesystem nach Anspruch 7, **dadurch gekennzeichnet, dass** die Referenzmasse (m) zum mechanischen Einwirken auf die Blockiereinrichtung (13, 113) ausgestaltet ist.

9. Insassenrückhaltesystem nach Anspruch 7 oder 8, **dadurch gekennzeichnet, dass** die Kraft (F), gegen die die Referenzmasse (m) verschiebbar ist, durch die Formel $F = B \, m \, g$ festgelegt ist, wobei $g$ die Erdbeschleunigung, $m$ die Masse der Referenzmasse (m) und $B$ ein frei wählbarer Parameter ist.

10. Insassenrückhaltesystem nach Anspruch 9, **dadurch gekennzeichnet, dass** der Parameter $B$ den dimensionslosen Wert 60 besitzt.

## Claims

1. A method of establishing belt pullout in an occupant restraint system for vehicles with a safety belt, **characterised in that** in an accident the following steps are carried out:

- detecting the vehicle acceleration, and
- establishing the belt pullout in dependence on the detected vehicle acceleration.

2. A method as set forth in claim 1 wherein belt pullout occurs only when the detected vehicle acceleration exceeds a predetermined acceleration value.

3. A method as set forth in claim 2 wherein belt pullout is established by the amount by which the vehicle acceleration exceeds the predetermined acceleration value.

4. A method as set forth in claim 2 or claim 3 **characterised in that** the predetermined acceleration value does not exceed sixty times the acceleration due to gravity.

5. A method as set forth in one of the preceding claims wherein detection of the vehicle acceleration is effected by means of a reference body of known mass, which is movable relative to the vehicle.

6. An occupant restraint system for vehicles comprising

- at least one safety belt (2) allowing belt pullout,
- a blocking device (13, 113) for blocking belt pullout, and
- a release device (11, 117) acting on the blocking device (13, 113) for definedly enabling belt pullout,

**characterised by**

an acceleration detection unit (m) which detects the vehicle acceleration and which in dependence on the vehicle acceleration detected in an accident acts on the release device (11, 117) for definition of the defined enablement of belt pullout.

7. An occupant restraint system as set forth in claim 6 **characterised in that** the acceleration detection unit has a reference mass (m) which is movable relative to the vehicle and which is displaceable out of its position against a predetermined force (F) and which upon a change in position against the predetermined force acts on the blocking unit (13, 113) as a release unit for enabling belt pullout.

8. An occupant restraint system as set forth in claim 7 **characterised in that** the reference mass (m) is adapted to act mechanically on the blocking device (13, 113).

9. An occupant restraint system as set forth in claim 7 or claim 8 **characterised in that** the force (F) against which the reference mass (m) is displaceable is established by the formula F = B m g, wherein g is the acceleration due to gravity, m is the mass of the reference mass (m) and B is a freely selectable parameter.

10. An occupant restraint system as set forth in claim 9 **characterised in that** the parameter B is of the dimensionless value 60.

**Revendications**

1. Procédé de détermination de la longueur d'extraction d'une ceinture de sécurité dans un système de retenue de passager de véhicules dotés de ceintures de sécurité,
   **caractérisé en ce que**
   en cas d'accident, les étapes suivantes sont exécutées :

   - détection de l'accélération du véhicule qui survient en cas d'accident et
   - détermination de la longueur d'extraction de la ceinture en fonction de l'accélération détectée du véhicule.

2. Procédé selon la revendication 1, dans lequel la ceinture n'est extraite que si l'accélération détectée du véhicule dépasse une valeur prédéterminée de l'accélération.

3. Procédé selon la revendication 2, dans lequel l'extraction de la ceinture est définie par la valeur de laquelle l'accélération du véhicule dépasse la valeur prédéterminée de l'accélération.

4. Procédé selon les revendications 2 ou 3, **caractérisé en ce que** la valeur prédéterminée de l'accélération ne dépasse pas soixante fois l'accélération due à la gravité terrestre.

5. Procédé selon l'une des revendications précédentes, dans lequel la détection de l'accélération du véhicule s'effectue au moyen d'un corps de référence de masse connue mobile par rapport au véhicule.

6. Système de retenue des passagers dans des véhicules, qui comprend :

   - au moins une ceinture de sécurité (2) qui permet une extraction de la ceinture,
   - un dispositif de blocage (13, 113) qui bloque l'extension de la ceinture de sécurité et
   - un dispositif de libération (11, 117) qui agit sur le dispositif de blocage (13, 113) pour libérer de manière définie une longueur d'extraction de la ceinture de sécurité,

   **caractérisé par**
   une unité (m) de détection de l'accélération qui détecte l'accélération du véhicule et qui agit sur le dispositif de libération (11, 117) pour définir la libération définie et fixer la longueur d'extraction de la ceinture en fonction de l'accélération du véhicule détectée en cas d'accident.

7.  Système de retenue de passager selon la revendication 6, **caractérisé en ce que** l'unité de détection de l'accélération présente une masse de référence (m) mobile par rapport au véhicule, qui peut être déplacée hors de sa position en opposition à une force (F) prédéfinie et qui agit sur l'unité de blocage (13, 113) comme unité de libération qui libère l'extraction de la ceinture de sécurité lorsque sa position change en opposition à la force prédéterminée.

8.  Système de retenue de passager selon la revendication 7, **caractérisé en ce que** la masse de référence (m) est configurée pour agir mécaniquement sur le dispositif de blocage (13, 113).

9.  Système de retenue de passager selon les revendications 7 ou 8, **caractérisé en ce que** la force (F) en opposition à laquelle la masse de référence (m) peut se déplacer est définie par la formule $F = B\, m\, g$, g représentant l'accélération due à la gravité terrestre, m la masse de la masse de référence (m) et B un paramètre sélectionné librement.

10. Système de retenue de passager selon la revendication 9, **caractérisé en ce que** le paramètre B a la valeur sans dimension de 60.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19604483 C1